(19) **Europäisches Patentamt / European Patent Office / Office européen des brevets**

(11) **EP 4 611 441 A1**

(12) **EUROPEAN PATENT APPLICATION**
published in accordance with Art. 153(4) EPC

(43) Date of publication:
03.09.2025 Bulletin 2025/36

(21) Application number: 23894929.1

(22) Date of filing: 16.11.2023

(51) International Patent Classification (IPC):
H04W 52/02 (2009.01)   H04W 52/14 (2009.01)
H04W 72/232 (2023.01)   G06N 20/00 (2019.01)
H04W 16/18 (2009.01)

(52) Cooperative Patent Classification (CPC):
G06N 20/00; H04W 16/18; H04W 52/02;
H04W 52/14; H04W 72/232

(86) International application number:
PCT/KR2023/018467

(87) International publication number:
WO 2024/112000 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.11.2022 KR 20220160676

(71) Applicant: Samsung Electronics Co., Ltd.
Suwon-si, Gyeonggi-do 16677 (KR)

(72) Inventors:
• PARK, Seungil
  Suwon-si, Gyeonggi-do 16677 (KR)
• JANG, Hyeondeok
  Suwon-si, Gyeonggi-do 16677 (KR)
• KIM, Suhwook
  Suwon-si, Gyeonggi-do 16677 (KR)
• SEO, Bongsung
  Suwon-si, Gyeonggi-do 16677 (KR)
• LEE, Juho
  Suwon-si, Gyeonggi-do 16677 (KR)

(74) Representative: Nederlandsch Octrooibureau
P.O. Box 29720
2502 LS The Hague (NL)

(54) **METHOD AND APPARATUS FOR CONTROLLING TRANSMISSION POWER OF UE IN WIRELESS COMMUNICATION SYSTEM**

(57) Provided is a 5th generation (5G) or 6th generation (6G) communication system for supporting higher data rates after 4th (4G) communication systems such as long term evolution (LTE). A base station (BS) according to an embodiment of the present disclosure may receive, from a user equipment (UE), a request signal for an energy saving (ES) mode of a transmission power control artificial intelligence (AI) model, determine whether or not to use (or switch) the transmission power control AI model in (or into) the ES mode, and based on the determining, transmit, to the UE, a response signal including information indicating whether or not to use (or switch) the transmission power control AI model in (or into) the ES mode.

FIG. 1

111
110
120
121 : TRANSMISSION POWER CONTROL ARTIFICIAL INTELLIGENCE (AI) MODEL OPERATES IN COVERAGE EXTENDING (CE) MODE
122 : TRANSMISSION POWER CONTROL AI MODEL SWITCHES INTO ENERGY SAVING (ES) MODE

# EP 4 611 441 A1

**Description**

**Technical Field**

The present disclosure relates to a wireless communication system, and more particularly, to a method and device for controlling transmission power of a user equipment (UE) through nonlinearity compensation of a transmitter amplifier, based on an artificial intelligence (AI) model.

**Background Art**

Over the history of developments through the wireless communication generations, technologies for services for humans, such as voice, multimedia, and data, have been mainly developed. It is expected that connected devices that have explosively increased in number after the commercialization of 5th generation (5G) communication systems are to be connected with communication networks. Examples of objects connected to the networks may include vehicles, robots, drones, home appliances, displays, smart sensors installed in various infrastructures, construction machines, factory facilities, etc. Mobile devices are predicted to evolve into various form factors, such as augmented reality (AR) glasses, virtual reality (VR) headsets, hologram devices, etc. In a 6th generation (6G) era, efforts to develop improved 6G communication systems have been made in order to provide a wide range of services by connecting hundreds of billions of devices and objects. For this reason, 6G communication systems are called the systems beyond the 5G communication.

In the 6G communication systems, which are expected to be materialized around the year of 2030, the maximum transmission speed is a tera (that is, 1,000 gigabytes) bps, and the wireless latency is 100 microseconds ($\mu$sec). That is, compared with the 5G communication systems, in the 6G communication systems, the transmission speed is 50 times faster, and the wireless latency is reduced to 1/10.

For achieving this high data transmission speed and ultra-low latency, it is contemplated to realize the 6G communication systems in the terahertz (THz) band (for example, the 95 gigahertz (95 GHz) to 3 THz band). In the THz band, due to more severe pathloss and air absorption than in the millimeter wave (mmWave) band, which is implemented in the 5G, it is anticipated that the importance of techniques for ensuring a signal arrival distance, i.e., a coverage, will increase. As examples of the main techniques for securing the coverage, it is needed to develop: new waveform techniques having superior coverage performance to a radio frequency (RF) device, an antenna, and an orthogonal frequency division multiplexing (OFDM) device; beamforming; massive multiple-input and multiple-output (massive MIMO) and full dimensional MIMO (FD-MIMO); and multiple antenna transmission techniques, such as the array antenna, the large scale antenna, etc. In addition, new techniques, such as metamaterial-based lenses and antennas, a high dimensional space multiplexing technique using the orbital angular momentum (OAM), and the reconfigurable intelligent surface (RIS), are discussed to improve the coverage of THz-band signals.

Also, for improvement in frequency efficiency and the system network, the techniques have been developed in the 6G communication systems, such as: a full duplex technique in which an uplink and a downlink simultaneously use the same frequency resource at the same time, a network technique using a satellite; a high-altitude platform station (HAPS), etc. in an integrative manner; a network architecture innovation technique for supporting a mobile base station, etc. and enabling optimization, automation, etc. of network operations; a dynamic spectrum-sharing technique through collision avoidance based on prediction using spectrums; an artificial intelligence (AI)-based communication technique for realizing system optimization by using AI from a designing stage and internalizing an end-to-end AI support function; and a next-generation distributed-computing technique for realizing complex services beyond the limit of terminal calculation capacities by using ultra-performance communication and computing resources (mobile edge computing (MEC), clouds, etc.). Moreover, it has been continually attempted to further enhance the connectivity between devices, optimize networks, facilitate the conversion of network entities into software, and increase the openness of wireless communication, through designing of new protocols to be used in the 6G communication systems, materializing hardware-based security environments, and developing techniques related to developments of mechanisms for a safe use of data and a method of maintaining privacy.

With such research and development in the 6G communication systems, the next hyper-connected experience is expected to be realized through hyper-connectivity of the 6G communication systems that encompasses not only connection between objects, but also connection between humans and objects. In detail, it is anticipated that it will be possible to provide services, such as truly immersive extended reality (XR), high-fidelity mobile holograms, digital replica, etc., through the 6G communication systems. Also, services, such as a remote surgery, industrial automation, and an emergency response, based on enhanced security and reliability, will be provided by the 6G communication systems and will be applied in a variety of fields, such as industries, medical services, automobiles, home appliances, etc.

**Disclosure of Invention**

**Technical Problem**

Embodiments of the present disclosure aim to provide a method and device for controlling transmission power of a user equipment (UE) through nonlinearity compensation of a transmitter amplifier, based on an artificial intelligence (AI) model.

**Solution to Problem**

Provided is a method performed by a base station for saving energy of a user equipment (UE) in a wireless communication system, according to an embodiment. The method of the base station may include: receiving, from the UE, a request signal for an energy saving (ES) mode of a transmission power control artificial intelligence (AI) model; determining whether or not to switch the transmission power control AI model into the ES mode; and based on the determining, transmitting, to the UE, a response signal including information indicating whether or not to switch the transmission power control AI model into the ES mode.

Provided is a method performed by a UE for saving energy of the UE in a wireless communication system, according to an embodiment. The method of the UE may include: transmitting, to a base station, a request signal for an ES mode of a transmission power control AI model; and based on determining by the base station of whether or not to switch the transmission power control AI model into the ES mode, receiving, from the base station, a response signal including information indicating whether or not to switch the transmission power control AI model into the ES mode.

Provided is a base station for saving energy of a UE in a wireless communication system, according to an embodiment. The base station may include a transceiver and at least one processor coupled to the transceiver, and the at least one processor may be configured to receive, from the UE, a request signal for an ES mode of a transmission power control AI model, determine whether or not to switch the transmission power control AI model into the ES mode, and based on the determining, transmit, to the UE, a response signal including information indicating whether or not to switch the transmission power control AI model into the ES mode.

Provided is a UE for saving energy of the UE in a wireless communication system, according to an embodiment. The UE may include a transceiver and at least one processor coupled to the transceiver, and the at least one processor may be configured to transmit, to a base station, a request signal for an ES mode of a transmission power control AI model, and based on determining by the base station of whether or not to switch the transmission power control AI model into the ES mode, receive, from the base station, a response signal including information indicating whether or not to switch the transmission power control AI model into the ES mode.

According to an embodiment, provided is a computer-readable recording medium having stored therein a program for executing, on a computer, at least one of embodiments of a method disclosed in this specification.

Other technical features may be easily and clearly understood by one of ordinary skill in the art through the following drawings, descriptions, and claims.

**Brief Description of Drawings**

FIG. 1 is a diagram for describing a method of saving energy of a user equipment (UE) by using a transmission power control artificial intelligence (AI) model, according to an embodiment.

FIG. 2 is a diagram for describing an example of a transmission power control AI model.

FIG. 3 is a diagram for describing an example of a method, performed by a transmission power control AI model, of performing nonlinearity compensation of a transmitter.

FIG. 4 is a diagram for describing a process of identifying the capability for a transmission power control AI model and an energy saving (ES) mode, between a UE and a base station, according to an embodiment.

FIG. 5 is a flowchart of a method by which a base station responds to a request by a UE for using (or switching) a transmission power control AI model in (or into) an ES mode, according to an embodiment.

FIG. 6 is a flowchart for describing a case where a base station responds to accept using (or switching) of a transmission power control AI model in (or into) an ES mode, according to an embodiment.

FIG. 7 is a flowchart for describing a case where a base station responds to reject using (or switching) of a transmission power control AI model in (or into) an ES mode, according to an embodiment.

FIG. 8 is a flowchart for describing an example of a process in which a base station determines whether or not to use (or switch) a transmission power control AI model in (or into) an ES mode, according to an embodiment.

FIG. 9 is a flowchart of a method of releasing an ES mode of a transmission power control AI model according to an indication of a base station, according to an embodiment.

FIG. 10 is a flowchart of a method of releasing an ES mode of a transmission power control AI model according to a request by a UE, according to an embodiment.

FIG. 11 is a flowchart of a method, performed by a UE, of notifying, to a base station, using (or switching) of a transmission power control AI model in (or into) an ES mode, according to an embodiment.

FIG. 12 is a flowchart for describing an example of a process in which a UE determines whether or not to use (or switch) a transmission power control AI model in (or into) an ES mode, according to an embodiment.

FIG. 13 is a block diagram of a UE according to an embodiment.

FIG. 14 is a block diagram of a base station according to an embodiment.

## Mode for the Invention

Before starting description of the "Mode for the Invention" hereinafter, it may be advantageous to describe the definitions of specific words and phrases used throughout the present patent document. The term "couple" and its derivatives refer to arbitrary direct or indirect communication between two or more elements, regardless of whether or not the elements are physically in contact with each other. The terms "transmit," "receive," and "communicate" as well as their derivatives include both direct communication and indirect communication. The terms "provide" and "include" as well as their derivatives include an inclusion without a limit. The term "or" is inclusive and denotes "and/or." The phrase "with respect to..." as well as its derivatives denotes include..., included in..., connect with..., contain..., contained in..., connect to or with..., coupled to or with..., communicable with..., cooperate with..., interleave..., juxtapose..., approach..., linked to or with..., have..., have the characteristic of..., related to or with..., etc.

Also, in this specification, when an element is described as being "connected" or "in contact" with another element, etc., the element may be directly connected or directly in contact with the other element, but unless specifically described otherwise, the element shall be understood to be connected or in contact with the other element with yet another element therebetween.

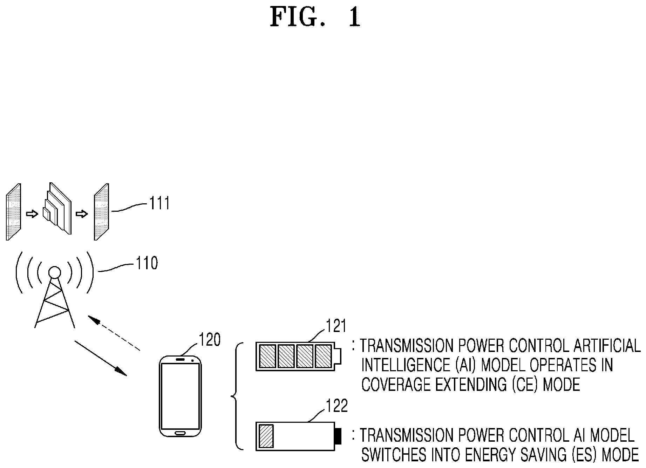

The present disclosure may be variously modified and may have various embodiments, and thus, certain embodiments are illustrated in the drawings and are described in detail through the detailed description. However, FIGS. 1 to 14 discussed below and various embodiments used to explain the principles of the present disclosure in the present specification are only examples and shall not be interpreted in any way as limiting the scope of the present disclosure. One of ordinary skill in the art shall understand that the principles of the present disclosure may be realized by an arbitrarily and suitably arranged system or device. Also, one of ordinary skill in the art shall understand that the principles of the present disclosure may be realized by a suitably configured arbitrary wireless communication system.

For the same reason, some parts in the accompanying drawings are exaggerated, omitted or schematically illustrated. Also, the size of each element may not fully reflect the actual size. Like numbers refer to like elements throughout the drawings.

Also, the numbers (for example, first, second, etc.) used in the process of description of the specification are only identification signs to distinguish one element from another.

Advantages and features of the present disclosure, and methods for achieving them will be understood more clearly when the following embodiments are read with reference to the accompanying drawings. However, the present disclosure is not limited to embodiments disclosed hereinafter and may be realized in various different forms. The present embodiments are just provided so that the present disclosure will be thoroughly and completely disclosed and the scope of the disclosure will be fully known to one of ordinary skill in the art, and the present disclosure will only be defined by the scope of claims. Like reference numerals refer to like elements throughout the specification. In describing the present disclosure, when the detailed description of the relevant functions or configurations is determined to unnecessarily obscure the gist of the present disclosure, the detailed description thereof may be omitted. The terms as used herein are those defined by taking into account functions in the present disclosure, which may vary depending on the intention of users or operators, precedents, or the like. Therefore, their definitions should be made based on the contents throughout the present specification.

Hereinafter, a base station (BS) is an entity performing resource allocation of a user equipment (UE), and may include at least one of a gNode B, an eNode B, a Node B (or an xNode B (x is an alphabetical letter including g and e)), a wireless contact unit, a BS controller, a satellite, an airborne object, or a node on a network. The UE may include a mobile station (MS), a vehicular object, a satellite, an airborne object, a cellular phone, a smartphone, a computer, or a multimedia system capable of performing a communication function. In the present disclosure, a downlink (DL) may be a radio transmission path of a signal transmitted from a BS to a UE, and an uplink (UL) may indicate a radio transmission path of a signal transmitted from a UE to a BS. Additionally, there may be a sidelink (SL) indicating a radio transmission path of a signal transmitted from a UE to another UE.

Also, hereinafter, long term evolution (LTE), LTE-advanced (LTE-A) or fifth generation (5G) systems may be described as an example, but an embodiment of the present disclosure may also be applied to other communication systems having similar technical backgrounds or channel types. For example, there may be 5G-Advance or new radio (NR)-Advance or sixth generation (6G) mobile communication techniques developed after 5G mobile communication techniques (or the NR), and the 5G hereinafter may be a concept including the previous LTE and LTE-A and other similar services. Also, the present disclosure is applicable to other communication systems through partial modification without greatly departing from the scope of the present disclosure at the discretion of one of ordinary skill in the art.

Here, it may be understood that combinations of each of blocks of processing flowcharts and the flowcharts may be performed by computer program instructions. The computer program instructions may be loaded on a processor of a universal computer, a special-purpose computer, or other programmable data processing equipment, and thus they generate means for performing functions described in the block(s) of the flowcharts when executed by the processor of the computer or other programmable data processing equipment. The computer program instructions may be stored in a computer-usable or computer-readable memory capable of directing a computer or another programmable data processing apparatus to implement a function in a particular manner, and thus the instructions stored in the computer-usable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

Furthermore, each block may represent a module, segment, or a part of code including one or more executable instructions to perform particular logic function(s). It should also be noted that the functions described in the block may occur out of order in several alternate embodiments. For example, two blocks illustrated in succession may in fact be executed substantially concurrently, or the blocks may sometimes be executed in a reverse order, depending on the functions involved therein.

Here, the term "~unit" used in the present embodiment denotes a software component or a hardware component such as a field programmable gate array (FPGA) or an application specific integrated circuit (ASIC), and a "unit" performs predetermined functions. However, the "~unit" is not limited to software or hardware. The "~unit" may be configured to be stored in an addressable storage medium, or to operate one or more processors. Thus, for example, the term "~unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. Functions served by components and "~units" may be combined into a less number of components and the "~units" or further divided into a more number of components and "~units." In addition, the components and the "~units" may be implemented to execute one or more central processing units (CPUs) in a device or security multimedia card. Also, in embodiments, the "~unit" may include one or more processors.

Terms used hereinafter indicating broadcast information, terms indicating control information, terms related to communication coverage, terms indicating a change in a state (for example, an event), terms indicating network entities, terms indicating messages, and terms indicating components of an apparatus are exemplified for convenience of description. Accordingly, the present disclosure is not limited to terms to be described below, and other terms having equal technical meanings may be used.

For convenience of description below, the present disclosure uses the terms and names defined in LTE and NR standards, which are the latest standards defined by the third generation partnership project (3GPP) organizations among currently existing communication standards. However, the present disclosure is not limited to those terms and names, and may be equally applied to systems conforming to other standards.

In a wireless communication system, when a signal is transmitted from a transmitter antenna, the signal may be amplified to appropriate maximum power by using a power amplifier, so that the signal may reach a far point. Here, in a high output area of the power amplifier, nonlinearity may occur, and thus, distortion may occur in the amplified transmission signal.

To reduce an effect caused by the distortion, a backoff technique is used. The backoff technique makes the power amplifier operate at a lower point than a maximum power point, that is, uses a circuit having a maximum power point which is higher than an actually used power level, to obtain linearity. Thus, a transmission output is reduced, and thus, coverage loss occurs and it is inefficient in terms of costs.

Recently, in a wireless communication field, a technique, performed by a receiver, of performing nonlinearity compensation of a power amplifier based on an AI model, to secure coverage through backoff reduction, has been developed.

In particular, under an assumption that the receiver compensates for, based on the AI model, the nonlinearity of the power amplifier, a UE may be indicated to transmit a signal by high transmission (Tx) power in order to increase the coverage. While such a technique has an advantage of increasing the coverage, power consumption of the UE increases because the UE has the high transmission power.

In order to solve this problem, the present disclosure aims to disclose a method and device for saving energy of a UE by using (or switching) an AI model, which is used for power amplifier nonlinearity compensation by a receiver, in (or into) an energy saving (ES) mode in certain cases.

According to embodiments of the present disclosure, by considering both the aspect of saving energy of a UE and the aspect of securing coverage, efficient nonlinearity compensation of a transmitter amplifier through a transmission power control AI model is possible.

In the present disclosure, the AI model used for the purpose of controlling transmission power in order to perform the nonlinearity compensation of the power amplifier is referred to as a "transmission power control AI model."

In a wireless communication system according to an embodiment, the transmission power control AI model may be trained and inferred in a BS.

The transmission power control AI model may be trained and inferred in various locations. For example, the transmission power control AI model may be trained in operation, administration, and management (OAM) and inferred in the BS such as a gNB. Also, the BS may continue training an AI model, based on the transmission power control AI model trained in the OAM.

When a central unit (CU) and a distributed unit (DU) are separated from each other in a BS 110, the transmission power control AI model may be trained and inferred in a gNB-CU. Alternatively, the transmission power control AI model may be trained in the OAM and inferred in the gNB-CU.

Also, the transmission power control AI model may be trained and inferred in a gNB-DU. The transmission power control AI model may be trained in the OAM and inferred in the gNB-DU.

However, the locations in which the transmission power control AI model is trained and inferred are not limited to the examples described above. Hereinafter, in the present disclosure, for convenience of explanation, a case where the transmission power control AI model is trained and inferred in the BS is described as an example.

Also, in this specification, a neural network (NN) is an artificial neural network model imitating brain neurons and is not limited to an artificial neural network model using a certain algorithm.

Also, in this specification, a "parameter" is a value used in an operation process of each of layers forming the NN and may include, for example, a weight, which is used when an input value is applied to a certain operation formula. Also, the parameter may be represented in a matrix form. The parameter is a value configured as a result of training and according to necessity may be updated through additional training data.

Also, in this specification, "NN configuration information" is information related to an element forming the NN and includes the described parameter. The transmission power control AI model may be configured by using the NN configuration information. Here, the NN configuration information may include information about at least one of the number of layers included in the NN or the number of nodes included in the NN. Also, the NN configuration information may further include information about at least one of the number of filter kernels for each layer included in the NN and a parameter of each filter kernel.

FIG. 1 is a diagram for describing a method of saving energy of a UE 120 by using a transmission power control AI model 111 of the BS 110, according to an embodiment.

Referring to FIG. 1, in a case 121 where a battery of the UE 120 is sufficient, the transmission power control AI model 111 of the BS 110 may operate in a coverage extending (CE) mode. Here, whether or not the battery of the UE 120 is sufficient may be determined based on the amount of power stored in the battery, an application executed in the UE 120, etc.

In the CE mode of the transmission power control AI model 111, under an assumption that a receiver of the BS 110 compensates for nonlinearity of a transmitter amplifier of the UE 120, the BS 110 may indicate the UE 120 to transmit a UL signal by high transmission power. The operation, performed by the transmission power control AI model 111 of the BS 110, of performing compensation by receiving a distortion signal transmitted by high transmission power, for securing coverage, may be described as an operation in the CE mode.

Thus, in the CE mode of the transmission power control AI model 111, a wireless link adaptation technique based on the transmission power control AI model 111 may be used to decrease a block error rate (BLER) and improve the coverage.

In a case 122 where the battery of the UE 120 is not sufficient, power consumption of the UE 120 may increase when the transmission power control AI model 111 of the BS 110 is continually used in the CE mode. Thus, the transmission power control AI model 111 of the BS 110 may operate in an ES mode. Here, the case 122 where the battery of the UE 120 is not sufficient is only an example case where there is a need to save energy of the UE 120. In other cases where it is necessary to save energy of the UE 120, the transmission power control AI model 111 of the BS 110 may operate in the ES mode.

Here, the UE 120 may request the BS 110 to use (or switch) the transmission power control AI model 111 in (or into) the ES mode or may directly determine whether or not to use (or switch) the transmission power control AI model 111 in (or into) the ES mode and notify the determination to the BS 110. The BS 110 receiving the request from the UE 120 may determine, according to a certain criterion with respect to the reception performance, whether or not to use (or switch) the transmission power control AI model 111 in (or into) the ES mode, and transmit a result of the determination to the UE 120.

In the ES mode, under an assumption that a receiver of the BS 110 compensates for nonlinearity of a transmitter amplifier of the UE 120, the UE 120 may be indicated to transmit a UL signal by lower transmission power than in the CE mode. The operation, performed by the transmission power control AI model 111 of the BS 110, of performing compensation by receiving a distortion signal transmitted by low transmission power, for saving energy of the UE 120, may be described as an operation in the ES mode.

Thus, in the ES mode of the transmission power control AI model 111, power consumption of the UE 120 for obtaining similar reception performance may be reduced, and thus, the UE 120 may save energy.

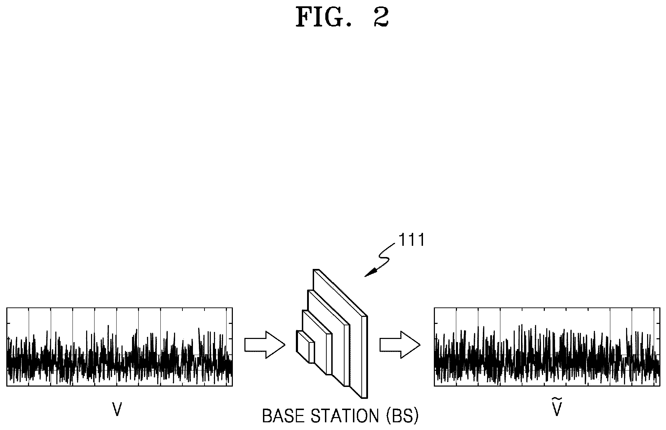

FIG. 2 is a diagram for describing an example of a transmission power control AI model.

Referring to FIG. 2, according to the present disclosure, the BS 110 may include the transmission power control AI model 111 formed of a neural network for controlling transmission power for performing nonlinearity compensation of a transmitter amplifier. However, this is only an example. In addition to the transmission power control AI model 111, the BS 110 may further include a pre-processor or a post-processor configured to perform a function for further improving the performance of the nonlinearity compensation of the transmitter amplifier.

The transmission power control AI model 111 may be implemented in the BS 110. The BS 110 may receive $V$ from the UE 120. $V$ may be described as a transmission signal distorted due to the nonlinearity of the transmitter amplifier of the UE 120, and $V$ illustrated in FIG. 2 is a signal form which may be an example of an input signal. The BS 110 may identify the received distorted transmission signal $V$. The BS 110 may input received $V$ into the transmission power control AI model 111 and may obtain $\tilde{V}$, which is compensated $V$, as an output. $\tilde{V}$ may be described as a compensated transmission signal, and $\tilde{V}$ illustrated in FIG. 2 is a signal form which may be an example of an output signal. Accordingly, the BS 110 may compensate for the distorted transmission signal by using the trained transmission power control AI model 111.

Previously, under an assumption that the transmission power control AI model 111 of the BS 110 may compensate for the distorted transmission signal, the transmission power control AI model 111 of the BS 110 may be used in the CE mode so that the UE 120 may be indicated to transmit a UL signal by increasing transmission power, in order to secure coverage.

The present disclosure provides a method and device for saving, in a certain case where it is necessary to save energy of the UE 120, transmission energy of the UE 120 by using the transmission power control AI model 111 of the BS 110 in an ES mode to indicate the UE 120 to transmit a UL signal by decreasing transmission power, necessarily based on a determination that reception performance of the BS 110 may not significantly deteriorate.

Even in the certain case where it is required to save the energy of the UE 120, when it is determined that the reception performance of the BS 110 may significantly drop, a CE mode of the transmission power control AI model 111 may be maintained or the ES mode may be released in order to secure coverage.

According to an example of the present disclosure, by using the transmission power control AI model 111, the BS 110 may perform an efficient transmission power control operation for the nonlinearity compensation of the transmitter amplifier by taking into account both the energy saving aspect and the coverage securing aspect of the UE 120.

The transmission power control AI model 111 may be jointly trained such that $\tilde{V}$ compensated from $V$ may have substantially the same value as a transmission signal before distortion. For example, a back propagation process may be performed by using loss information, which is the difference between the compensated $\tilde{V}$ and the transmission signal before distortion. Training may be performed by updating the NN configuration information of the transmission power control AI model 111 such that $\tilde{V}$ compensated for through the back propagation process may have substantially the same value as the pre-distortion transmission signal. For example, the base station 110 may obtain the pre-distortion transmission signal in advance through a field test, etc., may obtain a UL signal received from a plurality of UEs in real time, and may perform training based on the obtained UL signal. Here, the UL signal is not limited to only a reference signal (RS).

The NN configuration information of the transmission power control AI model 111 may include information about at least one of the number of layers or the number of nodes included in the transmission power control AI model 111. Also, the NN configuration information of the transmission power control AI model 111 may further include information about at least one of the number of filter kernels for each layer, the size of the filter kernel for each layer, a parameter of each filter kernel, or a parameter of an activation layer.

The training of the transmission power control AI model 111 may be performed in the BS or an additional server. Also, the BS or the server may store the NN configuration information of the transmission power control AI model 111.

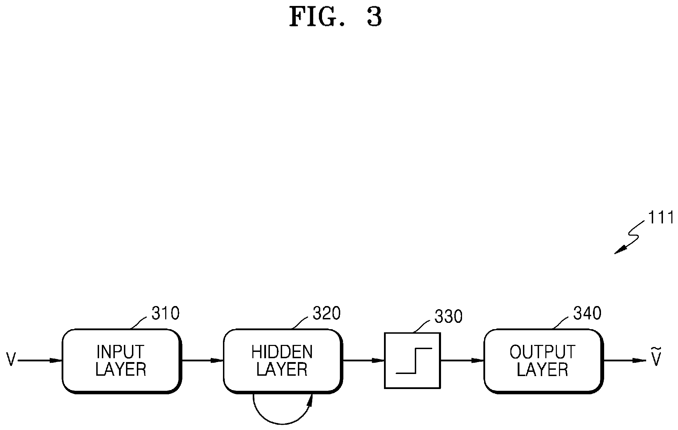

FIG. 3 is a diagram for describing an example of a method, performed by a transmission power control AI model, of performing nonlinearity compensation of a transmitter.

Referring to FIG. 3, the transmission power control AI model 111 of the BS 110 may be realized as a recurrent neural network (RNN) and may include an input layer 310, a hidden layer 320, an activation layer 330, and an output layer 340. The hidden layer 320 may perform the function of a memory memorizing a value previously output sequentially, and thus, may be referred to as a memory cell or an RNN cell. Each of layers included in the transmission power control AI model 111 may be a fully connected layer.

The BS 110 may input distorted data $V$ received from the UE 120 into the input layer 310 of the transmission power control AI model 111. Also, the BS 110 may input a bias b into the input layer 310 together with the distorted data $V$. The input distorted data $V$ may be considered as a sequential sequence, and a value of the distorted data $V$ at a present time point t may be represented as $x_t$. The input layer 310 may transmit $x_t$ to the hidden layer 320.

The hidden layer 320 may receive $x_t$ from the input layer 310 and may output, according to formula (1), $h_t$ which is a hidden state value.

$$h_t = \tanh(W_x x_t + W_h h_{t-1} + b) \qquad (1)$$

The hidden state value $h_t$ may denote a value transmitted by the hidden layer 320 in a direction toward the output layer 340 or a value transmitted by the hidden layer 320 to itself at a next time point t+1. Cambria Math is a weight value for the input value $x_t$, and Cambria Math is a weight value for a hidden state value Cambria Math at a previous time point t-1. Each weight value may have the same value at all time points in one hidden layer. However, when there are two or more hidden layers, each hidden layer may have a different weight value.

The hidden layer 320 may transmit the output $h_t$ to the activation layer 330. Also, the hidden layer 320 may transmit $h_t$ to itself at the next time point t+1.

The activation layer 330 may receive the hidden state value $h_t$ from the hidden layer 320. The activation layer 330 may assign a nonlinear characteristic to each $h_t$. The activation layer 330 may include a hyperbolic tangent (Tanh) function, a sigmoid function, a rectified linear unit (ReLU) function, a softmax function, or the like, but is not limited thereto. The assigning of the nonlinear characteristic in the activation layer 330 may denote changing and outputting some sample values of the output values $h_t$ of the hidden layer 320. Here, the changing may be performed by applying the nonlinear characteristic.

The activation layer 330 may determine whether or not to output the sample values of $h_t$ output from the hidden layer 320. For example, some sample values of the sample values of $h_t$ may be activated by the activation layer 330 and transmitted to the output layer 340, and some sample values may be non-activated by the activation layer 330 and may not be transmitted to the output layer 340. Also, the activation layer 330 may be included in the output layer 340.

The output layer 340 may output $y_t$ which is a value of the compensated signal $\check{V}$ at the present time point t, according to a formula (2).

$$y_t = f(W_y h_t + b) \qquad (2)$$

Cambria Math is a weight value for the output value $y_t$. f may be at least one of the hyperbolic tangent (Tanh) function, the sigmoid function, the ReLU function, or the softmax function, included in the activation layer 330, but is not limited thereto.

The output layer 340 may generate the compensated transmission signal $\check{V}$ from the input signal $V$ distorted by the transmitter amplifier according to the output $y_t$.

FIG. 3 illustrates that the transmission power control AI model 111 includes the input layer 310, the hidden layer 320, the activation layer 330, and the output layer 340. However, it is only an example, and according to an embodiment, the types of layers, the number of layers, and the operation method in each layer may be variously changed.

Also, the transmission power control AI model 111 may include other layers, such as a delayed-input fully connected layer, a pooling layer, etc., in addition to the layers described above.

Also, according to an embodiment, the transmission power control AI model 111 may also be realized through an echo state network (ESN), a long short-term memory (LSTM), a gated recurrent unit (GRU), or a convolutional neural network (CNN).

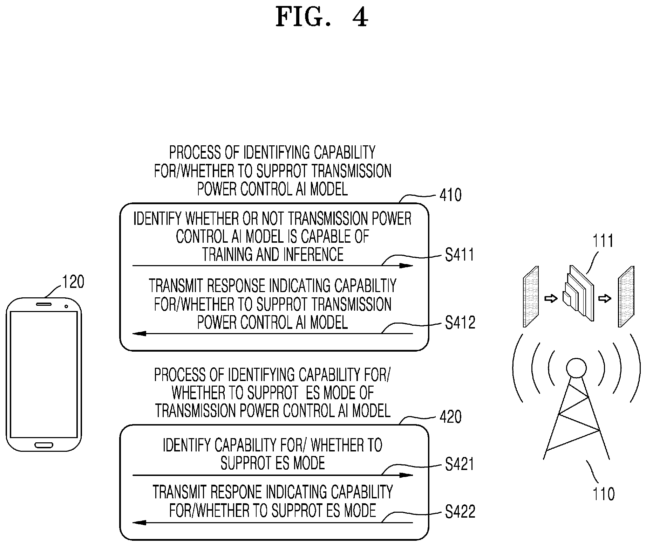

FIG. 4 is a diagram for describing a process of identifying the capability for the transmission power control AI model 111 and the ES mode, between the UE 120 and the BS 110, according to an embodiment.

Referring to FIG. 4, whether or not the transmission power control AI model 111 is supported may be identified (410), between the UE 120 and the BS 110. In operation S411, the UE 120 may transmit, to the BS 110, a signal for identifying whether or not the transmission power control AI model 111 is capable of training and inference. In operation S412, the BS 110 may transmit, to the UE 120, a response indicating the capability for the transmission power control AI model 111.

Referring to FIG. 4, whether or not the ES mode of the transmission power control AI model 111 is supported may be identified (420), between the UE 120 and the BS 110. In operation S421, the UE 120 may transmit, to the BS 110, a signal for identifying whether or not the transmission power control AI model 111 supports the ES mode. In operation S422, the BS 110 may transmit, to the UE 120, a response indicating that the transmission power control AI model supports the ES mode.

The process 410 of identifying the capability for the transmission power control AI model and the process 420 of identifying the capability of the transmission power control AI model for the ES mode may be simultaneously performed. Operations S411 and S421 may be performed by transmitting one signal, and operations S412 and S422 may also be performed by transmitting one signal.

The process 410 of identifying the capability for the transmission power control AI model and the process 420 of identifying the capability of the transmission power control AI model for the ES mode may be triggered by the BS 110. For example, in response to a request by the BS 110, the UE 120 may transmit, to the BS 110, UE capability information indicating whether or not the UE 120 is capable of transmitting a UL signal by increasing or decreasing transmission power. However, it is only an example, and without a request by the BS 110, the UE 120 may transmit the UE capability information to the BS 110.

The process 410 of identifying the capability for the transmission power control AI model and the process 420 of identifying the capability of the transmission power control AI model for the ES mode may be performed through radio resource control (RRC) signaling during initial access or handover.

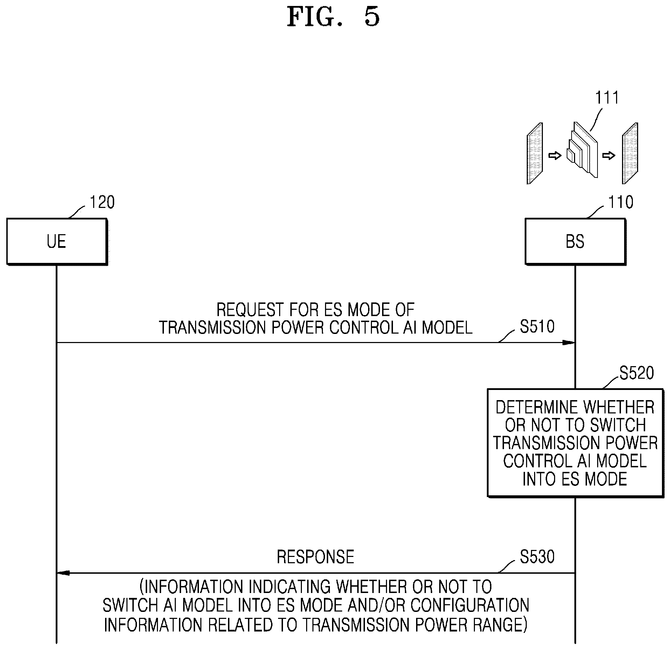

FIG. 5 is a flowchart of a method, performed by the BS 110, of responding to a request by the UE 120 for using (or switching into) an ES mode of the transmission power control AI model 111.

Referring to FIG. 5, in operation S510, the UE 120 may transmit, to the BS 110, a request signal for an ES mode of the transmission power control AI model 111. The request signal may be transmitted through a message, such as RRC, a medium access control-control element (MAC-CE), or uplink control information (UCI).

The UE 120 may periodically transmit the request signal or transmit the request signal according to an event trigger method. Examples of the event trigger method may include a method of triggering an event when a battery of the UE 120 decreases to a threshold value or lower, a method of triggering an event when DL reference signal received power (RSRP) is a threshold value or higher and, at the same time, a modulation and coding scheme (MCS) is used at a high level, or a method of triggering an event when it is determined that a high throughput is not required.

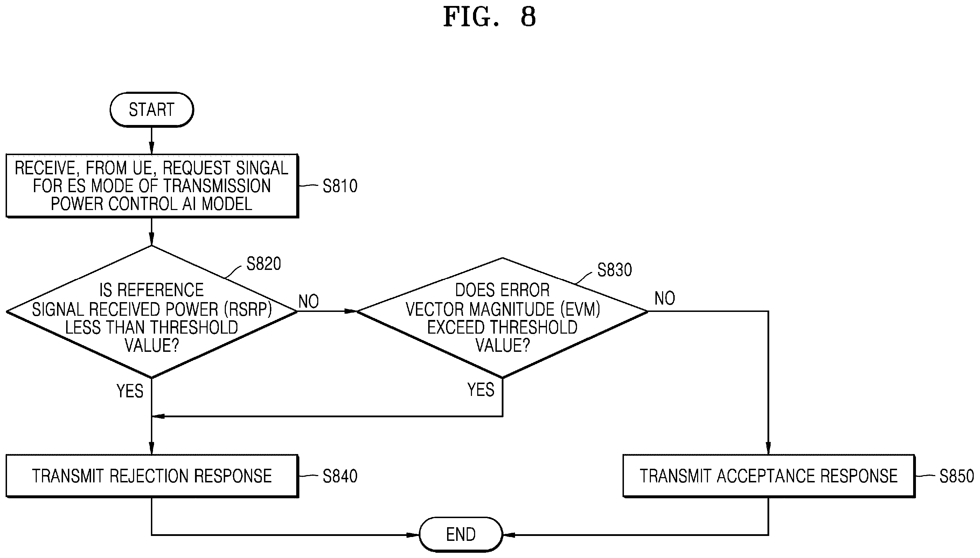

In operation S520, the BS 110 receiving the request by the UE 120 may determine whether or not to use (or switch) the transmission power control AI model 111 in (or into) the ES mode. The BS 110 may determine, based on information about at least one of a UL reception characteristic and cell information, whether or not to use (or switch) the transmission power control AI model 111 in (or into) the ES mode. A detailed determination method is described with reference to FIG. 8.

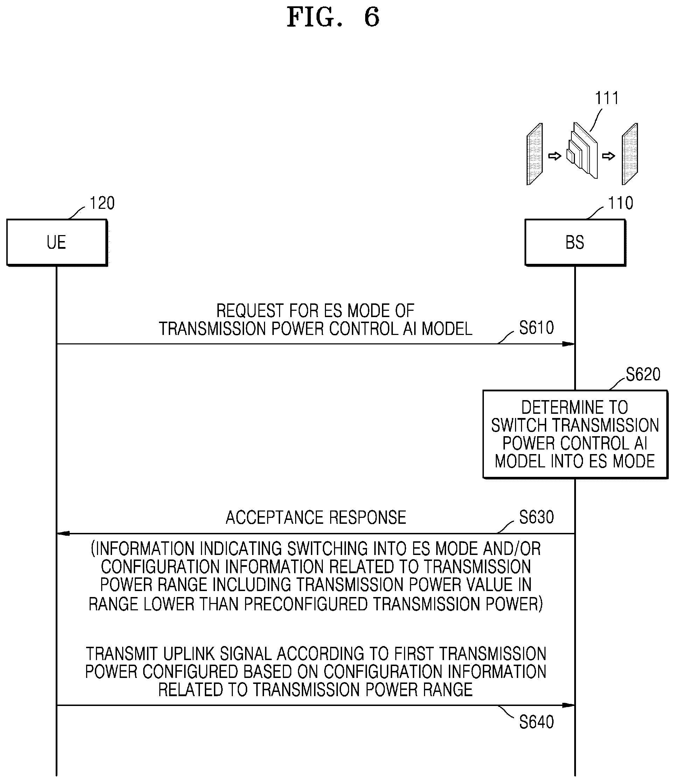

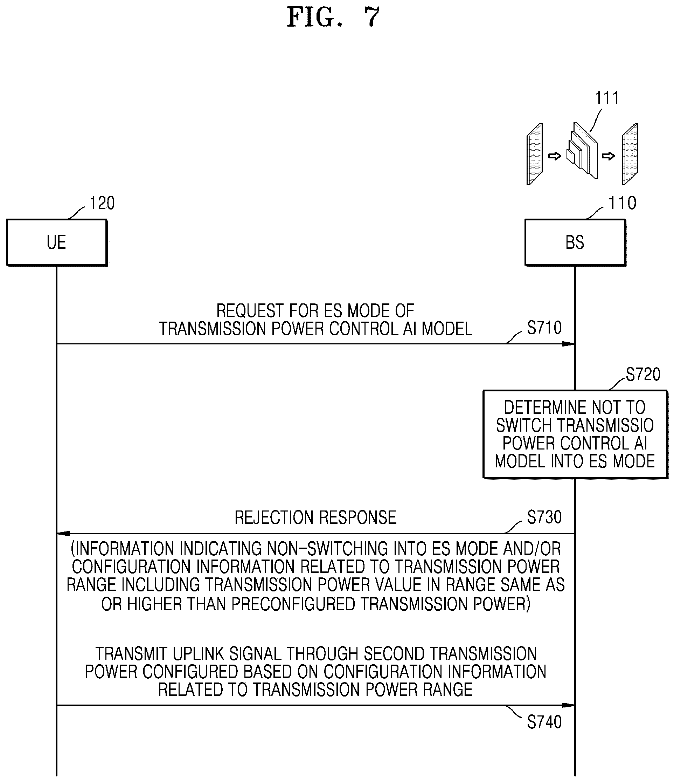

In operation S530, based on the determining, the BS 110 may transmit, to the UE 120, a response signal including information indicating whether or not to use (or switch) the transmission power control AI model 111 in (or into) the ES mode. The response signal may be transmitted through a message, such as RRC, an MAC-CE, or DCI. When the BS 110 determines to use (or switch) the transmission power control AI model 111 in (or into) the ES mode, the BS 110 may transmit an acceptance response to the UE 120. When the BS 110 determines not to use (or switch) the transmission power control AI model 111 in (or into) the ES mode, the BS 110 may transmit a rejection response to the UE 120. Each case is described in detail with reference to FIG. 6 or 7.

The response signal may include configuration information with respect to a transmission (Tx) power range. The configuration information with respect to the transmission power range may include configuration information with respect to maximum transmission power (P_CMAX). The transmission power range or the P_CMAX may be transmitted through a transmission power control (TPC) field in a DCI format. Configuration information about the TPC field may be transmitted through DCI or RRC signaling.

Table 1 is an example of a mapping relationship between a TPC command field for the ES mode of the transmission power control AI model 111 and the transmission power range. dBm denotes a unit in which power in a mW unit is represented by a dB scale.

[Table 1]

| TCP Command field for ES 모드 | Tx power range |
| --- | --- |
| 0 | 9~11 dBm |
| 1 | 11~13 dBm |
| 2 | 13~15 dBm |
| 3 | 15~17 dBm |
| 4 | 17~19 dBm |
| 5 | 19~21 dBm |
| 6 | 21~23 dBm |
| 7 | 23~25 dBm |

Table 2 is an example of a mapping relationship between the TPC command field for the ES mode of the transmission power control AI model 111 and the P_CMAX. dBm denotes a unit in which power in a mW unit is represented by a dB scale.

[Table 2]

| TCP Command field for ES 모드 | P_CMAX |
|---|---|
| 0 | 11 dBm |
| 1 | 13 dBm |
| 2 | 15 dBm |
| 3 | 17 dBm |
| 4 | 19 dBm |
| 5 | 21 dBm |
| 6 | 23 dBm |
| 7 | 25 dBm |

FIG. 6 is a flowchart for describing a case where the BS 110 responds to accept using (or switching) of the transmission power control AI model 111 in (or into) the ES mode, according to an embodiment.

Referring to FIG. 6, in operation S610, the UE 120 may transmit, to the BS 110, a request signal for the ES mode of the transmission power control AI model 111. The request signal may be transmitted through a message, such as RRC, an MAC-CE, or UCI.

In operation S620, the BS 110 may determine to use (or switch) the transmission power control AI model 111 in (or into) the ES mode. Based on information about at least one of a UL reception characteristic and cell information, the BS 110 may determine to use (or switch) the transmission power control AI model 111 in (or into) the ES mode. When it is determined that even when the UE 120 transmits a UL signal by decreasing transmission power, similar reception performance can be expected, the BS 110 may determine to use (or switch) the transmission power control AI model 111 in (or into) the ES mode. A detailed determination method is described with reference to FIG. 8.

In operation S630, the BS 110 may transmit an acceptance response signal to the UE 120, based on the determination to use (or switch) the transmission power control AI model 111 in (or into) the ES mode. The acceptance response signal may be transmitted through a message, such as RRC, a MAC-CE, or DCI.

The acceptance response signal may include information indicating the using (or switching) of the transmission power control AI model 111 in (or into) the ES mode.

The acceptance response signal may include configuration information with respect to a transmission power range. Here, the configuration information with respect to the transmission power range may include a transmission power value in a range lower than transmission power preconfigured for the UE 120.

In operation S640, the UE 120 may transmit the UL signal to the BS 110 according to first transmission power configured based on the configuration information with respect to the transmission power range. The first transmission power may be lower than the transmission power preconfigured for the UE 120. Here, the preconfigured transmission power may denote transmission power configured in a CE mode of the transmission power control AI model.

Even when the request signal for the ES mode of the transmission power control AI model 111 is not received from the UE 120, the BS 110 may transmit, based on its own determination, the acceptance response signal to the UE 120. In this case, the BS 110 may operate similarly as in operations S620 to S640.

According to operations S610 to S640, in the ES mode of the transmission power control AI model, the UE 120 may transmit the UL signal by using transmission power lower than transmission power used in the CE mode, and thus, power consumption of the UE 120 for obtaining similar reception performance may be reduced, so that the UE 120 may save energy.

FIG. 7 is a flowchart for describing a case where the BS 110 responds to reject using (or switching) of the transmission power control AI model 111 in (or into) the ES mode, according to an embodiment.

Referring to FIG. 7, in operation S710, the UE 120 may transmit, to the BS 110, a request signal for the ES mode of the transmission power control AI model 111. The request signal may be transmitted through a message, such as RRC, an MAC-CE, or UCI.

In operation S720, the BS 110 may determine not to use (or switch) the transmission power control AI model 111 in (or into) the ES mode. Based on information about at least one of a UL reception characteristic and cell information, the BS 110 may determine not to use (or switch) the transmission power control AI model 111 in (or into) the ES mode. When it is determined that when the UE 120 transmits a UL signal by decreasing transmission power, reception performance may radically deteriorate, the BS 110 may determine not to use (or switch) the transmission power control AI model 111 in (or into) the ES mode. A detailed determination method is described with reference to FIG. 8.

In operation S730, the BS 110 may transmit a rejection response signal to the UE 120, based on the determination not to use (or switch) the transmission power control AI model 111 in (or into) the ES mode. The rejection response signal may be transmitted through a message, such as RRC, a MAC-CE, or DCI.

The rejection response signal may include information indicating the non-using (or non-switching) of the transmission power control AI model 111 in (or into) the ES mode.

The rejection response signal may include configuration information with respect to a transmission power range. Here, the configuration information with respect to the transmission power range may include a transmission power value in a range equal to or higher than transmission power preconfigured for the UE 120.

In operation S740, the UE 120 may transmit the UL signal to the BS 110 according to second transmission power configured based on the configuration information with respect to the transmission power range. The second transmission power may be equal to or higher than the transmission power preconfigured for the UE 120. Here, the preconfigured transmission power may denote transmission power configured in a CE mode of the transmission power control AI model.

According to operations S710 to S740 described above, when it is determined that reception performance of the BS 110 may radically deteriorate, the transmission power control AI model 111 may not be switched into the ES mode, and the CE mode may be maintained, to improve coverage, even when there is a request by the UE.

FIG. 8 is a flowchart for describing an example of a process in which the BS 110 determines whether or not to use (or switch) the transmission power control AI model 111 in (or into) an ES mode, according to an embodiment.

Referring to FIG. 8, in operation S810, the BS 110 may receive, from the UE 120, a request for the ES mode of the transmission power control AI model. The BS 110 receiving the request by the UE 120 may determine whether or not to use (or switch) the transmission power control AI model 111 in (or into) the ES mode (S520, S620, or S720). The BS 110 may determine, based on at least one of a reception characteristic of the BS or cell information, whether or not to use (or switch) the transmission power control AI model 111 in (or into) the ES mode.

Here, an example of the reception characteristic of the BS may include UL RSRP, an error vector magnitude (EVM), etc. An example of the cell information may include a location of a peripheral cell, a cell load, etc. The cell load may denote the number of UEs, an occupied physical resource block (PRB), etc. However, the determination criteria of the base station 110 are not limited to the examples described above and may further include other information which may indicate the reception performance of the BS 110.

In operation S820, the BS 110 may determine whether the UL RSRP is less than a threshold value $\triangle_p$. The threshold value $\triangle_p$ may be preconfigured for the BS 110.

In operation S830, the BS 110 may determine whether the EVM exceeds a threshold value $\triangle_E$. The threshold value $\triangle_E$ may be preconfigured for the BS 110.

In operation S840, the BS 110 may transmit a rejection response signal to the UE 120, when the UL RSRP is less than the threshold value $\triangle_p$ or the EVM exceeds the threshold value $\triangle_E$.

When the UL RSRP is less than the threshold value $\triangle_p$ or the EVM exceeds the threshold value $\triangle_E$, the BS 110 may determine that when the UE 120 transmits the UL signal by decreasing transmission power, the reception performance may radically deteriorate. Thus, the BS 110 may determine not to use (or switch) the transmission power control AI model 111 in (or into) the ES mode.

When there is a BS nearby having a cell load that is equal to or less than a threshold value $\triangle_c$ even when the UL RSRP is less than the threshold value $\triangle_p$ or the EVM exceeds the threshold value $\triangle_E$, the BS 110 may transmit the acceptance response signal to the UE 120 and also may indicate a handover.

In operation S850, when the UL RSRP is not less than the threshold value $\triangle_p$ (that is, being equal to or greater than the threshold value $\triangle_p$) and the EVM does not exceed the threshold value $\triangle_E$ (that is, being equal to or less than the threshold value $\triangle_E$), the BS 110 may transmit the acceptance response signal to the UE 120.

When the UL RSRP is not less than the threshold value $\triangle_p$ (that is, being equal to or greater than the threshold value $\triangle_p$) and the EVM does not exceed the threshold value $\triangle_E$ (that is, being equal to or less than the threshold value $\triangle_E$), the BS 100 may determine that similar reception performance may be obtained even when the UE 120 transmits the UL signal by decreasing transmission power, and thus, may determine to use (switch) the transmission power control AI model 111 in (or into) the ES mode.

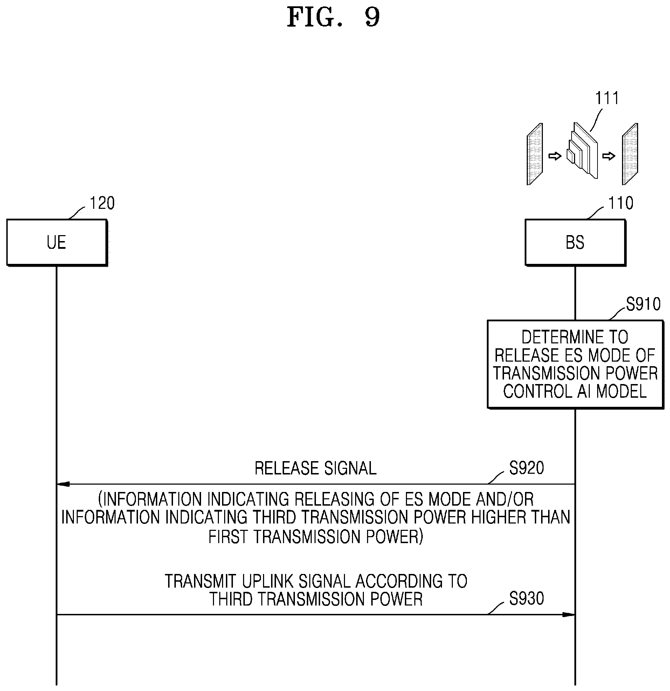

FIG. 9 is a flowchart of a method of releasing an ES mode of the transmission power control AI model 111, based on an indication of the BS 110, according to an embodiment.

Referring to FIG. 9, in operation S910, the BS 110 may determine to release the ES mode of the transmission power control AI model 111. When it is identified that the UE 120 is outside the coverage eligible to use the ES mode of the transmission power control AI model 111, that is, when it is determined that the reception performance of the BS 110 may radically deteriorate, the BS 110 may determine to release the ES mode.

By using substantially the same method as described with reference to FIG. 8 (operations S820 to S850), the BS 110 may identify that the UE 120 is outside the coverage eligible for using the ES mode of the transmission power control AI model 111, that is, may determine that the reception performance of the BS 110 may radically deteriorate, and thus, may determine to release the ES mode.

In operation S920, the BS 110 may transmit a release signal of the ES mode of the transmission power control AI model 111 to the UE 120. The release signal may be transmitted through a message, such as RRC, an MAC-CE, or DCI. The release signal may include information indicating the release of the ES mode of the transmission power control AI model 111. The release signal may include information indicating transmission of a UL signal by third transmission power that is higher than the first transmission power.

In operation S930, the UE 120 may transmit the UL signal to the BS 110 through the third transmission power. Because the third transmission power is higher than the first transmission power configured for the ES mode, the transmission power control AI model 111 may be used (or switched) in (or into) the CE mode again after the ES mode is released.

According to operations S910 to S930 described above, when it is determined that the reception performance of the BS 110 radically deteriorates after the BS 110 uses (or switches) the transmission power control AI model 111 in (or into) the ES mode, the transmission power control AI model 111 may be switched from the ES mode into the CE mode again to secure coverage.

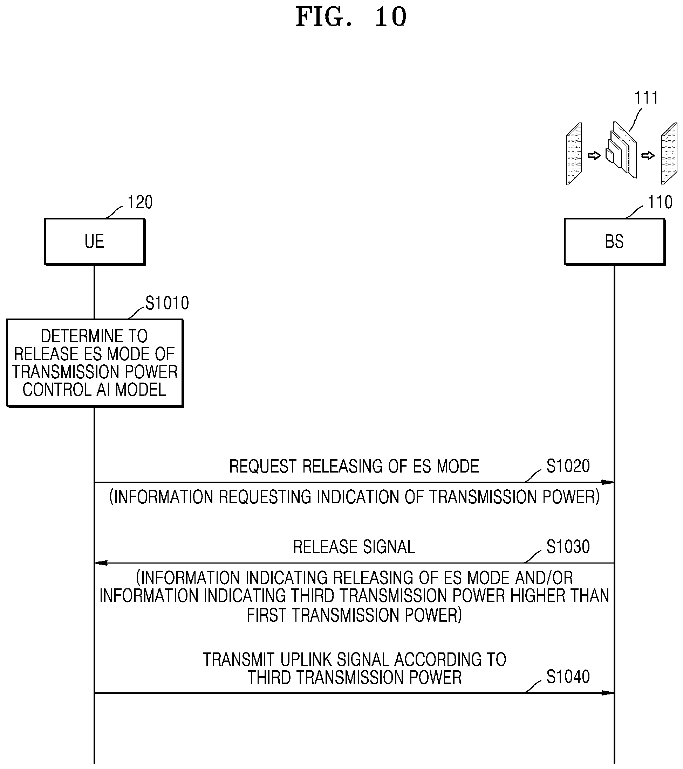

FIG. 10 is a flowchart of a method of releasing an ES mode of a transmission power control AI model, in response to a request by a UE, according to an embodiment.

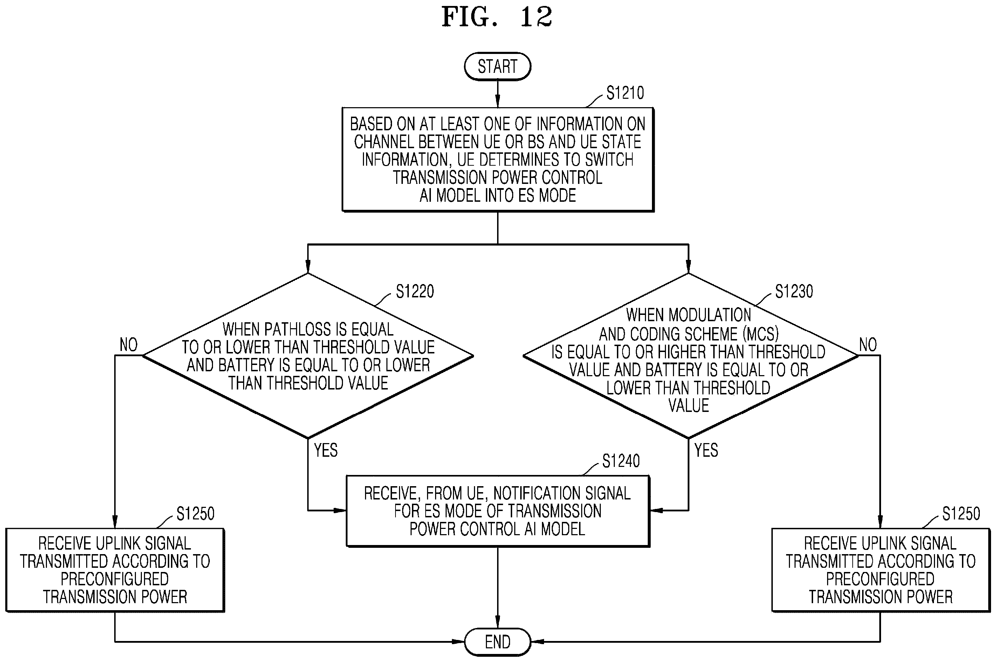

Referring to FIG. 10, in operation S1010, the UE 120 may determine to release the ES mode of the transmission power control AI model. Based on substantially the same method as described with reference to FIG. 12 (operations S1210 to 1260), the UE 120 may determine to release the ES mode of the transmission power control AI model. Based on information about a channel between the UE 120 and the BS 110 and state information of the UE 120, the UE 120 may determine to release the ES mode of the power control AI model. The information about the channel between the UE 120 and the BS 110 may include an MCS, ambient environments (temperature, humidity, topography, etc.), obstacles (a mountain, building, etc.), pathloss due to noise or interference, shadowing, fading, etc., and the state information of the UE 120 may include battery information of the UE 120. However, the criteria for the determining by the UE 120 are not limited to the examples described above and may include all information which may be used by the UE 120 to predict the reception performance of the BS 110.

In operation S1020, based on the determination for the release, the UE 120 may transmit, to the BS 110, a release request signal of the transmission power control AI model. The release request signal may be transmitted through a message, such as RRC, an MAC-CE, or UCI. The release request signal may include information requesting indication of transmission power.

In operation S1030, the BS 110 receiving the release request signal of the UE 120 may transmit a release signal for the ES mode of the transmission power control AI model 111 to the UE 120. The release signal may be transmitted through a message, such as RRC, an MAC-CE, or DCI. The release signal may include information indicating the release of the ES mode of the transmission power control AI model 111. The release signal may include information indicating transmission of the UL signal through the third transmission power that is higher than the first transmission power.

In operation S1040, the UE 120 may transmit the UL signal to the BS 110 through the third transmission power. Because the third transmission power is higher than the first transmission power configured for the ES mode, the transmission power control AI model 111 may be used (or switched) in (or into) the CE mode again after the release of the ES mode.

According to operations S1010 to S1040 described above, also, when the UE requests the release of the ES mode after the BS 110 uses (or switches) the transmission power control AI model 111 in (or into) the ES mode, the ES mode may be released, and the transmission power control AI model 111 may be used (or switched) in (or into) the CE mode again to secure coverage.

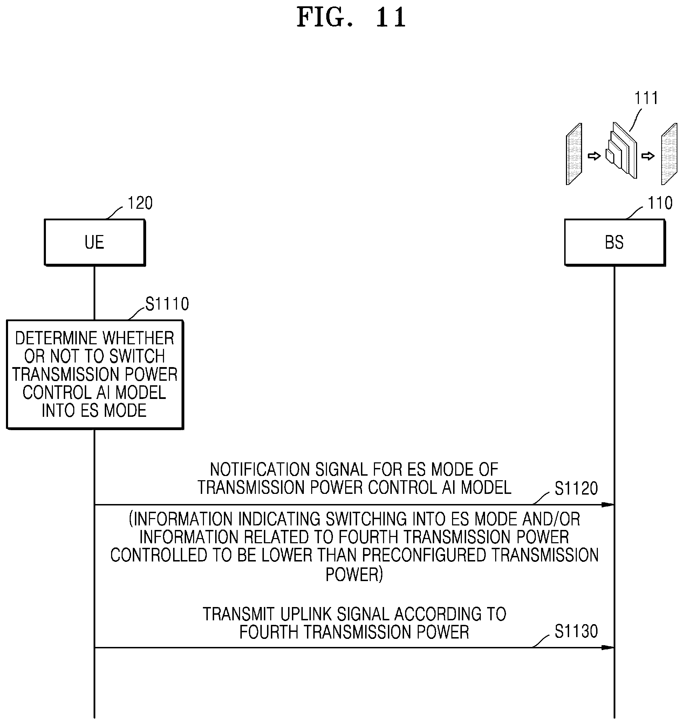

FIG. 11 is a flowchart of a method, performed by a UE, of notifying, to a BS, using (or switching) of a transmission power control AI model in (or into) an ES mode, according to an embodiment.

Referring to FIG. 11, in operation S1110, the UE 120 may determine to use (or switch) the transmission power control AI model 111 in (or into) the ES mode. The UE 120 may determine to use (or switch) the transmission power control AI model in (or into) the ES mode, based on information about a channel between the UE 120 and the BS 110, state information of the UE 120, etc. When it is determined that the BS 110 may not experience significant deterioration of reception performance even when a UL signal is transmitted by decreasing transmission power, the UE 120 may determine to use (or switch) the transmission power control AI model 111 in (or into) the ES mode. A detailed determination method is described with reference to FIG. 12.

In operation S1120, based on the determination to use (or switch) the transmission power control AI model 111 in (or into) the ES mode, the UE 120 may transmit, to the BS 110, a notification signal for the ES mode of the transmission power control AI model 111. The notification signal may be transmitted through a message, such as RRC, an MAC-CE, or UCI.

The notification signal may include information indicating using (or switching) of the transmission power control AI model in (or into) the ES mode.

The notification signal may include information about fourth transmission power controlled to be lower than transmission power preconfigured for the UE 120. Here, the preconfigured transmission power may denote transmission power configured in the CE mode of the transmission power control AI model.

In operation S1130, the UE 120 may transmit a UL signal to the BS 110 through the fourth transmission power controlled to be lower than the transmission power preconfigured for the UE 120.

According to operations S1110 to S1130, in the ES mode of the transmission power control AI model, the UE 120 may transmit the UL signal by using transmission power lower than transmission power used in the CE mode, and thus, power consumption of the UE 120 for obtaining similar reception performance may be reduced, so that the UE 120 may save energy.

When in operation S1110, the UE 120 determines that the reception performance of the BS 110 may radically deteriorate when the UL signal is transmitted by decreasing transmission power, the UE 120 may transmit, to the BS 110, a signal for notifying non-using (or non-switching) of the transmission power control AI model 111 in (or into) the ES mode. In this case, when a certain condition is met or according to a certain cycle, the UE 120 may try to perform the determination of operation S1110 again.

Also, according to operations S1110 to S1130, even when the transmission power control AI model 111 of the BS 110 operates in the ES mode, the ES mode of the transmission power control AI model 111 may be released according to operations S910 to S930 described with reference to FIG. 9. In this case, the third transmission power may be higher than the fourth transmission power.

Also, according to operations S1110 to S1130, even when the transmission power control AI model 111 of the BS 110 operates in the ES mode, the ES mode of the transmission power control AI model 111 may be released according to operations S1010 to S1040 described with reference to FIG. 10. In this case, the third transmission power may be higher than the fourth transmission power.

FIG. 12 is a flowchart for describing an example of a process in which a UE determines whether or not to switch a transmission power control AI model into an ES mode, according to an embodiment.

Referring to FIG. 12, in operation S1210, based on information about a channel between the UE 120 and the BS 110, state information of the UE 120, etc., the UE 120 may determine to use (or switch) the transmission power control AI model 111 in (or into) the ES mode.

The information about the channel between the UE 120 and the BS 110 may include an MCS, ambient environments (temperature, humidity, topography, etc.), obstacles (a mountain, building, etc.), pathloss due to noise or interference, shadowing, fading, etc., and the state information of the UE 120 may include battery information of the UE 120. However, the criteria for the determining by the UE 120 are not limited to the examples described above and may include all information which may be used by the UE 120 to predict the reception performance of the BS 110.

In operation S1220, the UE 120 may determine whether the pathloss is equal to or less than a threshold value $\triangle_L$ and a battery of the UE 120 is equal to or less than a threshold value $\triangle_B$. The threshold value $\triangle_L$ and the threshold value $\triangle_B$ may be preconfigured for the UE 120.

In operation S1230, the UE 120 may determine whether the MCS is equal to or greater than a threshold value $\triangle_M$ and the battery of the UE 120 is equal to or less than the threshold value $\triangle_B$. The threshold value $\triangle_M$ and the threshold value $\triangle_B$ may be preconfigured for the UE 120.

In operation S1240, when the pathloss is equal to or less than the threshold value $\triangle_L$ and the battery of the UE 120 is equal to or less than the threshold value $\triangle_B$ or when the MCS is equal to or greater than the threshold value $\triangle_M$ and the battery of the UE 120 is equal to or less than the threshold value($\triangle_B$), the UE 120 may determine to use (or switch) the transmission power control AI model 111 in (or into) the ES mode, Based on the determination to use (or switch) the transmission power control AI model 111 in (or into) the ES mode, the UE 120 may transmit, to the BS 110, a notification signal for the ES mode of the transmission power control AI model 111.

In operation S1250, when the pathloss exceeds the threshold value $\triangle_L$ or the battery of the UE 120 exceeds the threshold value $\triangle_B$ or when the MCS is less than the threshold value $\triangle_M$, the UE 120 may determine that reception performance of the BS 110 may radically deteriorate when the UE 120 transmits a UL signal by decreasing transmission power and may transmit the UL signal to the BS 110 according to preconfigured transmission power. Here, the preconfigured transmission power may denote transmission power configured in the CE mode of the transmission power control AI model.

In this case, the UE 120 may transmit, to the BS 110, a signal for notifying that the transmission power control AI model 111 may not be used (or switched) in (or into) the ES mode. The UE 120 may try to perform the determination of operations S1220 and S1240 again, when a certain condition is met or according to a certain cycle.

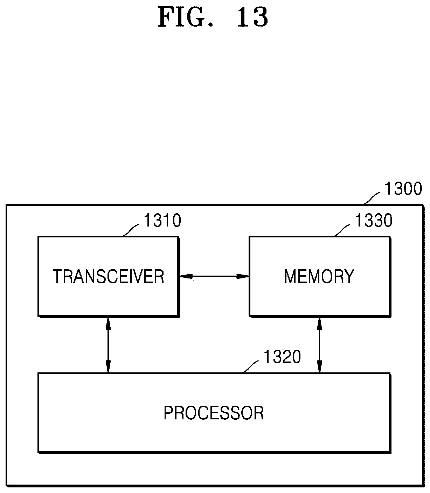

FIG. 13 is a block diagram of a UE according to an embodiment.

Referring to FIG. 13, a UE 1300 may include a transceiver 1310, a processor 1320, and a memory 1330. According to a communication method of the UE 1300 described above, the transceiver 1310, the processor 1320, and the memory 1330 of the UE 1300 may operate. However, the components of the UE 1300 are not limited to the examples above. For example, the UE 1300 may include more elements than the components described above or fewer elements than the components described above. According to an embodiment, the transceiver 1310, the processor 1320, and the memory 1330 may be realized in the form of a single chip. Also, the processor 1320 may include one or more processors.

A receiver of the UE 1300 and a transmitter of the UE 1300 are collectively called the transceiver 1310, which may transmit or receive signals to or from a BS or a network entity. The signals to be transmitted to or received from the BS or the network entity may include control information and data. For this, the transceiver 1310 may include an RF transmitter for up-converting the frequency of a signal to be transmitted and amplifying the signal and an RF receiver for low-noise amplifying a received signal and downconverting the frequency of the received signal. However, it is only the transceiver 1310 according to one embodiment, and the components of the transceiver 1310 are not limited to the RF transmitter and RF receiver.

Also, the transceiver 1310 may perform functions for transmitting and receiving signals through a wireless channel. For example, the transceiver 1310 may receive a signal on a wireless channel and output the signal to the processor 1320, or transmit a signal output from the processor 1320 on a wireless channel.

The memory 1330 may store a program and data required for operation of the UE 1300. Also, the memory 1330 may store control information or data included in a signal obtained from the BS. The memory 1330 may include storage media such as a read-only memory (ROM), a random-access memory (RAM), a hard disk, a compact disc (CD)-ROM, and a digital versatile disc (DVD) or a combination of the storage media. Also, the memory 1330 may not be separately provided, but may be integrated into the processor 1320. The memory 1330 may include a volatile memory, a non-volatile memory, or a combination of the volatile memory and the non-volatile memory. Also, the memory 1330 may provide the data stored at a request of the processor 1320.

The processor 1320 may control a series of processes so that the UE 1300 may operate according to the embodiment of the present disclosure described above. For example, the processor 1320 may receive a control signal and a data signal through the transceiver 1310 and process the received control signal and data signal. The processor 1320 may transmit the processed control signal and data signal through the transceiver 1310. Also, the processor 1320 may write or read data to or from the memory 1330. The processor 1320 may perform functions of protocol stacks required according to the communication standards. For this, the processor 1320 may include at least one processor or micro-processor. According to an embodiment, some of the transceiver 1310 or the processor 1320 may be referred to as a communication processor (CP).

The processor 1320 may include one or more processors. Here, the one or more processors may include a general-purpose processor such as a central processing unit (CPU), an application processor (AP), a digital signal processor (DSP), etc., a dedicated graphics processor such as a graphics processing unit (GPU), a vision processing unit (VPU), etc., or a dedicated AI processor such as a neural processing unit (NPU). For example, when the one or more processors are the dedicated AI processors, the dedicated AI processors may be designed as a hardware structure specialized for processing particular AI models.

According to an embodiment, the processor 1320 may transmit, to the BS, a request for an ES mode of a transmission power control AI model. Also, the processor 1320 may receive, from the BS, a response with respect to the ES mode of the transmission power control AI model and information about a transmission power range. Based on a preconfigured condition, the processor 1320 may determine whether or not to use (or switch) the transmission power control AI model of the BS in (or into) the ES mode or whether or not to release the ES mode. The processor 1120 may request the release of the ES mode of the transmission power control AI model.

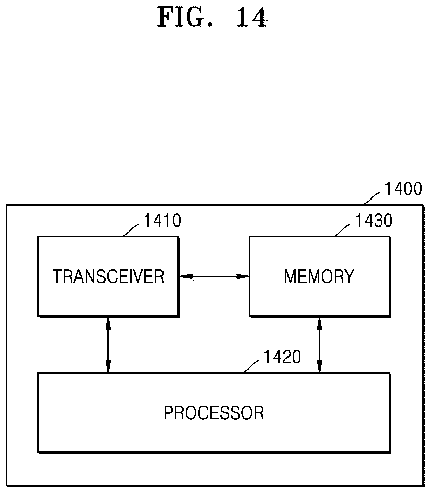

FIG. 14 is a block diagram of a BS according to an embodiment.

Referring to FIG. 14, the BS 1400 may include a transceiver 1410, a processor 1420, and a memory 1430. According to a communication method of the BS 1400 described above, the transceiver 1410, the processor 1420, and the memory 1430 of the BS 1400 may operate. However, the components of the BS 1400 are not limited to the examples above. For example, the BS 1400 may include more elements than the components described above or fewer elements than the components described above. According to an embodiment, the transceiver 1410, the processor 1420, and the memory 1430 may be realized in the form of a single chip. Also, the processor 1420 may include one or more processors.

A receiver of the BS 1400 and a transmitter of the BS 1400 are collectively called the transceiver 1410, which may transmit or receive signals to or from a BS or a network entity. The signals to be transmitted to or received from the UE or the network entity may include control information and data. For this, the transceiver 1410 may include an RF transmitter for up-converting the frequency of a signal to be transmitted and amplifying the signal and an RF receiver for low-noise amplifying a received signal and downconverting the frequency of the received signal. However, it is only the transceiver 1410 according to one embodiment, and the components of the transceiver 1410 are not limited to the RF transmitter and RF receiver.

Also, the transceiver 1410 may perform functions for transmitting and receiving signals through a wireless channel. For example, the transceiver 1410 may receive a signal on a wireless channel and output the signal to the processor 1420, or transmit a signal output from the processor 1420 on a wireless channel.

The memory 1430 may store a program and data required for operation of the BS 1400. Also, the memory 1430 may store control information or data included in a signal obtained from the BS 1400. The memory 1430 may include storage media such as a ROM, a RAM, a hard disk, a CD-ROM, and a DVD or a combination of the storage media. Also, the memory 1430 may not be separately provided, but may be integrated into the processor 1420. The memory 1430 may include a volatile memory, a non-volatile memory, or a combination of the volatile memory and the non-volatile memory. Also, the memory 1430 may provide the data stored at a request of the processor 1420.

The processor 1420 may control a series of processes so that the BS 1400 may operate according to the embodiment of the present disclosure described above. For example, the processor 1420 may receive a control signal and a data signal through the transceiver 1410 and process the received control signal and data signal. The processor 1420 may transmit the processed control signal and data signal through the transceiver 1410. Also, the processor 1420 may write or read data to or from the memory 1430. The processor 1420 may perform functions of protocol stacks required according to the communication standards. For this, the processor 1420 may include at least one processor or microprocessor. According to an embodiment, some of the transceiver 1410 or the processor 1420 may be referred to as a CP.

The processor 1420 may include one or more processors. Here, the one or more processors may include a general-purpose processor such as a CPU, an AP, a DSP, etc., a dedicated graphics processor such as a GPU, a VPU, etc., or a dedicated AI processor such as an NPU. For example, when the one or more processors are the dedicated AI processors, the dedicated AI processors may be designed as a hardware structure specialized for processing particular AI models.

According to an embodiment, the processor 1420 may receive, from the UE, a request for an ES mode of a transmission power control AI model. Based on a preconfigured condition, the processor 1420 may determine whether or not to use (or switch) the transmission power control AI model of the BS in (or into) the ES mode or whether or not to release the ES mode. The processor 1420 may transmit, to the UE, an acceptance, rejection, or release response with respect to using (or switching) of the transmission power control AI model in (or into) the ES mode, and may transmit configuration information about a transmission power range or a transmission power value.

The AI-related functions according to the present disclosure are operated through the processor and the memory. The processor may include one or more processors. Here, the one or more processors may include a general-purpose processor such as a CPU, an AP, a DSP, etc., a dedicated graphics processor such as a GPU, a VPU, etc., or a dedicated AI processor such as an NPU. The one or more processors control input data to be processed, according to a pre-defined operation rule or AI model stored in the memory. When the one or more processors are the dedicated AI processors, the dedicated AI processors may be designed as a hardware structure specialized for processing particular AI models.

The predefined operation rule or AI model may be created by training. Here, that the predefined operation rule or AI model is created by training denotes that the predefined operation rule or AI model is created to be configured to perform a desired feature (or objective), as a basic AI model (or a deep learning model) is trained by using a large volume of training data through a training algorithm. Such training may be performed directly by the devices performing AI according to the present disclosure or may be performed through an additional server and/or system. Examples of the training algorithm may include, but are not limited to, supervised learning, unsupervised learning, semi-supervised learning, or reinforcement learning.

The AI model (or the deep learning model) may include a plurality of neural network layers. Each of the plurality of neural network layers may have a plurality of weight values and perform a neural network operation through an operation between an operation result of a previous layer and the plurality of weight values. The plurality of weight values of the plurality of neural network layers may be optimized by a training result of the AI model. For example, the plurality of weight values may be updated to reduce or minimize the loss value or the cost value obtained by the AI model during a training procedure. The artificial neural network may include, but is not limited to, a deep neural network (DNN), for example, a convolutional neural network (CNN), a recurrent neural network (RNN), a restricted Boltzmann machine (RBM), a deep belief network (DBN), a bidirectional recurrent deep neural network (BRDNN), or a deep Q-network.

The detailed example for describing an embodiment according to the present disclosure is merely a combination of each reference, method, specific method, and operation. Through a combination of at least two methods from among various methods described above, the BS and the UE may secure coverage and save transmission energy of the UE, through nonlinearity compensation of a transmitter amplifier based on an AI model. Also, in this case, the BS and the UE may perform the operation according to a method determined through a combination of at least one or two of the methods described above. For example, it may be possible to perform some of the operations according to an embodiment in combination with some of the operations according to another embodiment.

A machine-readable storage medium may be provided in the form of a non-transitory storage medium. Here, the "non-transitory storage medium" only denotes a tangible device and does not contain a signal (for example, electromagnetic waves). This term does not distinguish a case where data is stored in the storage medium semi-permanently and a case where the data is stored in the storage medium temporarily. For example, the "non-transitory storage medium" may include a buffer where data is temporarily stored.

According to an embodiment, a method according to various embodiments disclosed in the present specification may be provided by being included in a computer program product. The computer program product may be purchased between a seller and a buyer as a product. The computer program product may be distributed in the form of a machine-readable storage medium (for example, a CD-ROM) or may be distributed (for example, downloaded or uploaded) directly or online, through an application store or between two user devices (for example, smart phones). In the case of online distribution, at least part of the computer program product (for example, a downloadable application) may be at least temporarily stored or temporarily generated in a machine-readable storage medium, such as a server of a manufacturer, a server of an application store, or a memory of a relay server.

**Claims**

1. A method performed by a base station (BS) for controlling transmission power of a user equipment (UE) in a wireless communication system, the method comprising:

   receiving, from the UE, a request signal for an energy saving (ES) mode of an artificial intelligence (AI) model for controlling transmission power;
   determining whether or not to switch the AI model into the ES mode; and
   based on the determining, transmitting, to the UE, a response signal including information indicating whether or not to switch the AI model into the ES mode.

2. The method of claim 1, wherein the response signal includes configuration information related to a transmission power range.

3. The method of claim 2, wherein, when it is determined to switch the AI model into the ES mode, the information indicating whether or not to switch the AI model into the ES mode includes information indicating switching of the AI model into the ES mode, and

   the configuration information related to the transmission power range includes a transmission power value in a range lower than transmission power preconfigured for the UE,
   the method further comprising receiving, from the UE, an uplink signal transmitted according to first transmission power configured based on the configuration information related to the transmission power range.

4. The method of claim 2, wherein, when it is determined not to switch the AI model into the ES mode, the information indicating whether or not to switch the AI model into the ES mode comprises information indicating non-switching of the AI model into the ES mode, and

   the configuration information related to the transmission power range comprises a transmission power value in a range equal to or higher than transmission power preconfigured for the UE,
   the method further comprising receiving, from the UE, an uplink signal transmitted according to second transmission power configured based on the configuration information related to the transmission power range.

5. The method of claim 3, further comprising:

   determining to release the ES mode of the AI model;
   transmitting, to the UE, a release signal including information indicating releasing of the ES mode of the AI model and information indicating third transmission power higher than the first transmission power; and
   receiving, from the UE, the uplink signal transmitted according to the indicated third transmission power.

6. The method of claim 5, further comprising:

   receiving, from the UE, a release request signal for releasing the ES mode of the AI model; and
   transmitting, to the UE, the release signal in response to the release request signal.

7. The method of claim 1, wherein the determining of whether or not to switch the AI model into the ES mode comprises determining whether or not to switch the AI model into the ES mode, based on information on at least one of an uplink reception characteristic or cell information.

8. A method performed by a user equipment (UE) for controlling transmission power in a wireless communication system, the method comprising:

transmitting, to a base station (BS), a request signal for an energy saving (ES) mode of an artificial intelligence (AI) model for controlling transmission power; and

based on a determination by the BS with respect to whether or not to switch the AI model into the ES mode, receiving, from the BS, a response signal comprising information indicating whether or not to switch the AI model into the ES mode.

9. The method of claim 8, wherein the response signal includes configuration information related to a transmission power range.

10. The method of claim 9, wherein, when the BS determines to switch the AI model into the ES mode, the information indicating whether or not to switch the AI model into the ES mode includes information indicating switching of the AI model into the ES mode, and

the configuration information related to the transmission power range includes a transmission power value in a range lower than transmission power preconfigured for the UE, the method further comprising transmitting, to the BS, an uplink signal according to first transmission power configured based on the configuration information related to the transmission power range.

11. The method of claim 9, wherein, when the BS determines not to switch the AI model into the ES mode, the information indicating whether or not to switch the AI model into the ES mode includes information indicating non-switching of the AI model into the ES mode, and

the configuration information related to the transmission power range includes a transmission power value in a range equal to or higher than transmission power preconfigured for the UE, the method further comprising transmitting, to the BS, an uplink signal according to second transmission power configured based on the configuration information related to the transmission power range.

12. The method of claim 10, further comprising:

receiving, from the BS, a release signal including information indicating releasing of the ES mode of the AI model and information indicating third transmission power higher than the first transmission power; and transmitting, to the BS, an uplink signal according to the indicated third transmission power.

13. The method of claim 10, further comprising:

determining to release the ES mode of the AI model; based on the determining, transmitting, to the BS, a release request signal for releasing the ES mode of the AI model; and receiving, from the BS, the release signal, in response to the release request signal.

14. A base station (BS) for controlling transmission power of a user equipment (UE) in a wireless communication system, the BS comprising:

a transceiver; and at least one processor coupled to the transceiver and configured to:

receive, from the UE, a request signal for an energy saving (ES) mode of an artificial intelligence (AI) model for controlling transmission power; determine whether or not to switch the AI model into the ES mode; and based on the determining, transmit, to the UE, a response signal comprising information indicating whether or not to switch the AI model into the ES mode.

15. A user equipment (UE) for controlling transmission power in a wireless communication system, the UE comprising:

a transceiver; and at least one processor coupled to the transceiver and configured to:

transmit, to a base station (BS), a request signal for an energy saving (ES) mode of an artificial intelligence (AI) model for controlling transmission power; and
based on a determination by the BS with respect to whether or not to switch the AI model into the ES mode, receive, from the BS, a response signal comprising information indicating whether or not to switch the AI model into the ES mode.

# FIG. 1

121 : TRANSMISSION POWER CONTROL ARTIFICIAL INTELLIGENCE (AI) MODEL OPERATES IN COVERAGE EXTENDING (CE) MODE

122 : TRANSMISSION POWER CONTROL AI MODEL SWITCHES INTO ENERGY SAVING (ES) MODE

# FIG. 2

V  BASE STATION (BS)  $\tilde{V}$

111

# FIG. 3

V → [INPUT LAYER 310] → [HIDDEN LAYER 320] → [330] → [OUTPUT LAYER 340] → $\tilde{V}$

111

# FIG. 4

PROCESS OF IDENTIFYING CAPABILITY
FOR/WHETHER TO SUPPROT TRANSMISSION
POWER CONTROL AI MODEL — 410

IDENTIFY WHETHER OR NOT TRANSMISSION POWER
CONTROL AI MODEL IS CAPABLE OF
TRAINING AND INFERENCE — S411

TRANSMIT RESPONSE INDICATING CAPABILTIY
FOR/WHETHER TO SUPPROT TRANSMISSION
POWER CONTROL AI MODEL — S412

PROCESS OF IDENTIFYING CAPABILITY FOR/
WHETHER TO SUPPROT ES MODE OF
TRANSMISSION POWER CONTROL AI MODEL — 420

IDENTIFY CAPABILITY FOR/ WHETHER TO
SUPPROT ES MODE — S421

TRANSMIT RESPONE INDICATING CAPABILITY
FOR/WHETHER TO SUPPROT ES MODE — S422

120

111

110

# FIG. 5

# FIG. 6

UE 120

BS 110

111

REQUEST FOR ES MODE OF
TRANSMISSION POWER CONTROL AI MODEL S610

S620

DETERMINE TO
SWITCH TRANSMISSION
POWER CONTROL AI
MODEL INTO ES MODE

ACCEPTANCE RESPONSE S630

(INFORMATION INDICATING SWITCHING INTO ES MODE AND/OR
CONFIGURATION INFORMATION RELATED TO TRANSMISSION
POWER RANGE INCLUDING TRANSMISSION POWER VALUE IN
RANGE LOWER THAN PRECONFIGURED TRANSMISSION POWER)

TRANSMIT UPLINK SIGNAL ACCORDING TO FIRST TRANSMISSION
POWER CONFIGURED BASED ON CONFIGURATION INFORMATION
RELATED TO TRANSMISSION POWER RANGE

S640

# FIG. 7

120
UE

111

110
BS

REQUEST FOR ES MODE OF
TRANSMISSION POWER CONTROL AI MODEL — S710

S720
DETERMINE NOT TO
SWITCH TRANSMISSIO
POWER CONTROL AI
MODEL INTO ES MODE

REJECTION RESPONSE — S730
(INFORMATION INDICATING NON-SWITCHING INTO ES MODE AND/OR
CONFIGURATION INFORMATION RELATED TO TRANSMISSION POWER
RANGE INCLUDING TRANSMISSION POWER VALUE IN RANGE SAME AS
OR HIGHER THAN PRECONFIGURED TRANSMISSION POWER)

TRANSMIT UPLINK SIGNAL THROUGH SECOND TRANSMISSION
POWER CONFIGURED BASED ON CONFIGURATION INFORMATION
RELATED TO TRANSMISSION POWER RANGE
S740

# FIG. 8

START

RECEIVE, FROM UE, REQUEST SINGAL FOR ES MODE OF TRANSMISSION POWER CONTROL AI MODEL — S810

IS REFERENCE SIGNAL RECEIVED POWER (RSRP) LESS THAN THRESHOLD VALUE? — S820

NO →

DOES ERROR VECTOR MAGNITUDE (EVM) EXCEED THRESHOLD VALUE? — S830

NO →

YES ↓

YES ↓

TRANSMIT REJECTION RESPONSE — S840

TRANSMIT ACCEPTANCE RESPONSE — S850

END

EP 4 611 441 A1

# FIG. 9

111

110

120

UE

BS

S910

DETERMINE TO
RELEASE ES MODE OF
TRANSMISSION POWER
CONTROL AI MODEL

RELEASE SIGNAL                                        S920

(INFORMATION INDICATING RELEASING OF ES MODE AND/OR
INFORMATION INDICATING THIRD TRANSMISSION POWER HIGHER THAN
FIRST TRANSMISSION POWER)

TRANSMIT UPLINK SIGNAL ACCORDING TO
THIRD TRANSMISSION POWER                              S930

# FIG. 10

111

110

120

UE

BS

S1010

DETERMINE TO
RELEASE ES MODE OF
TRANSMISSION POWER
CONTROL AI MODEL

REQUEST RELEASING OF ES MODE — S1020

(INFORMATION REQUESTING INDICATION OF TRANSMISSION POWER)

RELEASE SIGNAL — S1030

(INFORMATION INDICATING RELEASING OF ES MODE AND/OR
INFORMATION INDICATING THIRD TRANSMISSION POWER HIGHER THAN
FIRST TRANSMISSION POWER)

TRANSMIT UPLINK SIGNAL ACCORDING TO
THIRD TRANSMISSION POWER — S1040

# FIG. 11

111

110

120

UE

BS

S1110

DETERMINE WHETHER
OR NOT TO SWITCH
TRANSMISSION POWER
CONTROL AI MODEL
INTO ES MODE

NOTIFICATION SIGNAL FOR ES MODE OF
TRANSMISSION POWER CONTROL AI MODEL          S1120

(INFORMATION INDICATING SWITCHING INTO ES MODE AND/OR
INFORMATION RELATED TO FOURTH TRANSMISSION POWER
CONTROLLED TO BE LOWER THAN PRECONFIGURED TRANSMISSION
POWER)

TRANSMIT UPLINK SIGNAL ACCORDING TO
FOURTH TRANSMISSION POWER          S1130

# FIG. 12

START

S1210

BASED ON AT LEAST ONE OF INFORMATION ON CHANNEL BETWEEN UE OR BS AND UE STATE INFORMATION, UE DETERMINES TO SWITCH TRANSMISSION POWER CONTROL AI MODEL INTO ES MODE

S1220

WHEN PATHLOSS IS EQUAL TO OR LOWER THAN THRESHOLD VALUE AND BATTERY IS EQUAL TO OR LOWER THAN THRESHOLD VALUE

NO · YES

S1230

WHEN MODULATION AND CODING SCHEME (MCS) IS EQUAL TO OR HIGHER THAN THRESHOLD VALUE AND BATTERY IS EQUAL TO OR LOWER THAN THRESHOLD VALUE

NO · YES

S1240

RECEIVE, FROM UE, NOTIFICATION SIGNAL FOR ES MODE OF TRANSMISSION POWER CONTROL AI MODEL

S1250

RECEIVE UPLINK SIGNAL TRANSMITTED ACCORDING TO PRECONFIGURED TRANSMISSION POWER

S1250

RECEIVE UPLINK SIGNAL TRANSMITTED ACCORDING TO PRECONFIGURED TRANSMISSION POWER

END

# FIG. 13

FIG. 14

## INTERNATIONAL SEARCH REPORT

| International application No. |
| --- |
| **PCT/KR2023/018467** |

**A.    CLASSIFICATION OF SUBJECT MATTER**

**H04W 52/02**(2009.01)i; **H04W 52/14**(2009.01)i; **H04W 72/232**(2023.01)i; **G06N 20/00**(2019.01)i; **H04W 16/18**(2009.01)i

According to International Patent Classification (IPC) or to both national classification and IPC

**B.    FIELDS SEARCHED**

Minimum documentation searched (classification system followed by classification symbols)

H04W 52/02(2009.01); H04M 1/73(2006.01); H04W 8/02(2009.01); H04W 88/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AI 모델(artificial intelligence model), 에너지 절약 모드(energy saving mode, ES mode), 모드 전환 여부(whether to switch modes)

**C.    DOCUMENTS CONSIDERED TO BE RELEVANT**

| Category* | Citation of document, with indication, where appropriate, of the relevant passages | Relevant to claim No. |
| --- | --- | --- |
| Y <br><br> A | KR 10-2010-0003734 A (KYOCERA WIRELESS CORP.) 11 January 2010 (2010-01-11) <br>   See paragraphs [0031]-[0036]; claim 19; and figure 4. | 1-2,7-9,14-15 <br><br> 3-6,10-13 |
| Y | WO 2022-052059 A1 (HUAWEI TECHNOLOGIES CO., LTD.) 17 March 2022 (2022-03-17) <br>   See claims 7-9. | 1-2,7-9,14-15 |
| A | KR 10-2016-0002240 A (SAMSUNG ELECTRONICS CO., LTD.) 07 January 2016 (2016-01-07) <br>   See paragraphs [0060]-[0062]; and figure 3. | 1-15 |
| A | KR 10-2019-0121628 A (SK TELECOM CO., LTD.) 28 October 2019 (2019-10-28) <br>   See paragraphs [0034]-[0047]; and figure 4. | 1-15 |
| A | KR 10-2019-0129333 A (SK TELECOM CO., LTD.) 20 November 2019 (2019-11-20) <br>   See paragraphs [0049]-[0059]; and figure 4. | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 February 2024** | **23 February 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/018467**

| Patent document cited in search report | | | Publication date (day/month/year) | Patent family member(s) | | | Publication date (day/month/year) |
|---|---|---|---|---|---|---|---|
| KR | 10-2010-0003734 | A | 11 January 2010 | EP | 2145492 | A2 | 20 January 2010 |
| | | | | EP | 2145492 | B1 | 26 September 2012 |
| | | | | JP | 2010-525756 | A | 22 July 2010 |
| | | | | JP | 5117568 | B2 | 16 January 2013 |
| | | | | KR | 10-1145067 | B1 | 14 May 2012 |
| | | | | US | 2008-0268917 | A1 | 30 October 2008 |
| | | | | US | 2016-0174157 | A1 | 16 June 2016 |
| | | | | US | 9295000 | B2 | 22 March 2016 |
| | | | | WO | 2008-134380 | A2 | 06 November 2008 |
| | | | | WO | 2008-134380 | A3 | 15 January 2009 |
| WO | 2022-052059 | A1 | 17 March 2022 | CN | 116325942 | A | 23 June 2023 |
| | | | | EP | 4207881 | A1 | 05 July 2023 |
| | | | | EP | 4207881 | A4 | 01 November 2023 |
| | | | | US | 2023-0209467 | A1 | 29 June 2023 |
| KR | 10-2016-0002240 | A | 07 January 2016 | KR | 10-2151031 | B1 | 02 September 2020 |
| | | | | US | 10327208 | B2 | 18 June 2019 |
| | | | | US | 2017-0164286 | A1 | 08 June 2017 |
| | | | | WO | 2016-003177 | A1 | 07 January 2016 |
| KR | 10-2019-0121628 | A | 28 October 2019 | KR | 10-2101928 | B1 | 20 April 2020 |
| KR | 10-2019-0129333 | A | 20 November 2019 | KR | 10-2082494 | B1 | 27 February 2020 |

Form PCT/ISA/210 (patent family annex) (July 2022)